# EUROPEAN PATENT SPECIFICATION

(11) **EP 0 645 906 B1**
(45) Date of publication and mention of the grant of the patent: **05.09.2001**
(21) Application number: 94200247.8
(22) Date of filing: 09.02.1994
(51) Int. Cl.: H04N 7/22, H04H 1/02

(54) **Optical CATV system**
Optisches Kabelfernsehsystem
Système de télévision par câble optique

(30) Priority: 12.02.1993 NL 9300281
(43) Date of publication of application: 29.03.1995
(73) Proprietor: Koninklijke KPN N.V., 9726 AE Groningen (NL)
(72) Inventor: Tan, Han Hiong, NL-2264 XZ Leidschendam (NL)

(56) References cited:
- WO-A-89/09518
- IEEE COMMUNICATIONS MAGAZINE, vol.29, no.3, 1 March 1989, PISCATAWAY, NJ US pages 22 - 30 STUART S. WAGNER ET AL. 'WDM applications in broadband telecommunications networks.'
- IEEE JOURNAL ON SELECTED AREAS IN COMMUNICATION., vol.8, no.6, 1 August 1990, NEW YORK US pages 973 - 982 LEONID G. KAZOVSKY 'Optical signal processing for lightwave communications networks.'
- IEEE JOURNAL ON SELECTED AREAS IN COMMUNICATION., vol.8, no.6, 1 August 1990, NEW YORK US pages 965 - 972 HIROMU TOBA ET AL. 'Factors affecting the design of optical FDM information distibution systems'
- Journal of Lightwave Technology, vol.11, no.1, 1 January 1993, New York, US, pages 60-68, Robert OLSHANSKY et al., 'Subcarrier Multiplexed Broad-Band Service Network: A Flexible Platform for B

## Description

### A. BACKGROUND OF THE INVENTION

The invention relates to a distribution system for simultaneously distributing signals, such as TV signals, belonging to a set of different FDM channels from an exchange, via an optical network, to subscribers connected to said network, the signals being converted, in E/O conversion means on the side of said exchange, from electrical signals into optical signals. Such a system is generally known. Signals - for example baseband TV signals - are frequency-multiplexed in their electric form so that they can be transmitted via different FDM channels to the subscriber side. At the subscriber side, the signals can once more be demultiplexed. Hitherto it was common usage for the signals of all the FDM channels to be converted, at the transmitting side (exchange side), by one and the same E/O converter (transmitting laser) and to transmit the optical signal consisting of more FDM channels to the subscriber side. In practice this, however, requires a certain number of transmitting lasers, as the output power per transmitting laser is limited and is not sufficient for all the connected subscribers. The electrical signal, which therefore comprises all the FDM channels, is thus fed to a number of transmitting lasers which are each intended for a group of subscribers, and the subscribers belonging to that group provide all the FDM channels. Normally, at the subscriber side, such a signal is again distributed over the various subscribers and converted, per subscriber, into an electrical signal. The electrical signal presented to a subscriber thus comprises all FDM channels.

One problem arising is that of intermodulation occurring, particularly in the transmitting lasers - which, after all, convert all the FDM channels - as a result of non-linearity in the conversion characteristics of the transmitting lasers. Said intermodulation manifests itself in particular owing to the electrical signals having to be converted into optical signals, by one and the same laser, over the whole frequency range of all the FDM channels.

A related problem is that in some cases intermodulation also occurs, as a result of distortion, in the optical fibres which transmit the converted optical signals to the subscriber side. The longer the optical fibres, the more pronounced this phenomenon becomes.

### B. SUMMARY OF THE INVENTION

The present invention as claimed in Claim 1 is based on the following insight. In practice, owing to the limited output power of the transmitting lasers and the large number of subscribers which have to be served, a large number of transmitting lasers is already required. This large number of transmitting lasers makes it possible to limit, per transmitting laser, the frequency range of the signals to be converted, without the total number of lasers becoming greater as a result. Owing to this limitation in frequency range, the intermodulation mentioned is avoided, however. Said limitation of the frequency range can be achieved by converting only one FDM channel, or alternatively a limited number of FDM channels per laser, and by only then, in the optical domain, combining the entire group of FDM channels and presenting them to the subscribers. Said combination of the optical signals can be effected on the side of the exchange or on the side of the subscribers. Especially if the distance between the exchange and the subscribers is large, it is preferable to combine together the signals of the various FDM channels on the subscriber side. In this case too it is true that, owing to the large number of subscribers, a large number of fibres is nevertheless already required, and that this number does not increase if those fibres are shared out among the various FDM channels.

It noted that there are known several systems which use, contrary to the present invention, wavelenght division multiplexing (WDM). In WDM systems various channels are divided by means of different wavelengths of the optical carrier: a first electrical channel is converted into an optical channel having a first wavelength lambda₁, a second electrical cahnnel into an optical channel heving carrier wavelength lambda₂, etc. Contrary to that, according to the present invention all channels are divided by there electrical frequencies and remain divided by those (electrical) frequencies, both in the electrical domain and in the optical domain. Because the mutual channel division is not achieved by means of different wavelengths as in WDM systems, the wavelengt of the optical carrier may be equal for all channels.

### C. REFERENCES

IEEE Commun Mag V29,3, Mar 1989, pp22-30; "WDM applications in broadband telecommunications networks"; Wagner, SS et al; WO8909518 British Telecom
IEEE J Sel Ar Commun, V8,6, Aug 1990, pp 973-982; "Optical signal processing for lightwave communications networks"; Kazovsky, LG;
IEEE J Sel Ar Commun, V8,6, Aug 1990, pp 965-972; "Factors affecting the design of optical FDM information distribution system"; Toba, H et al

### D. ILLUSTRATIVE EMBODIMENTS

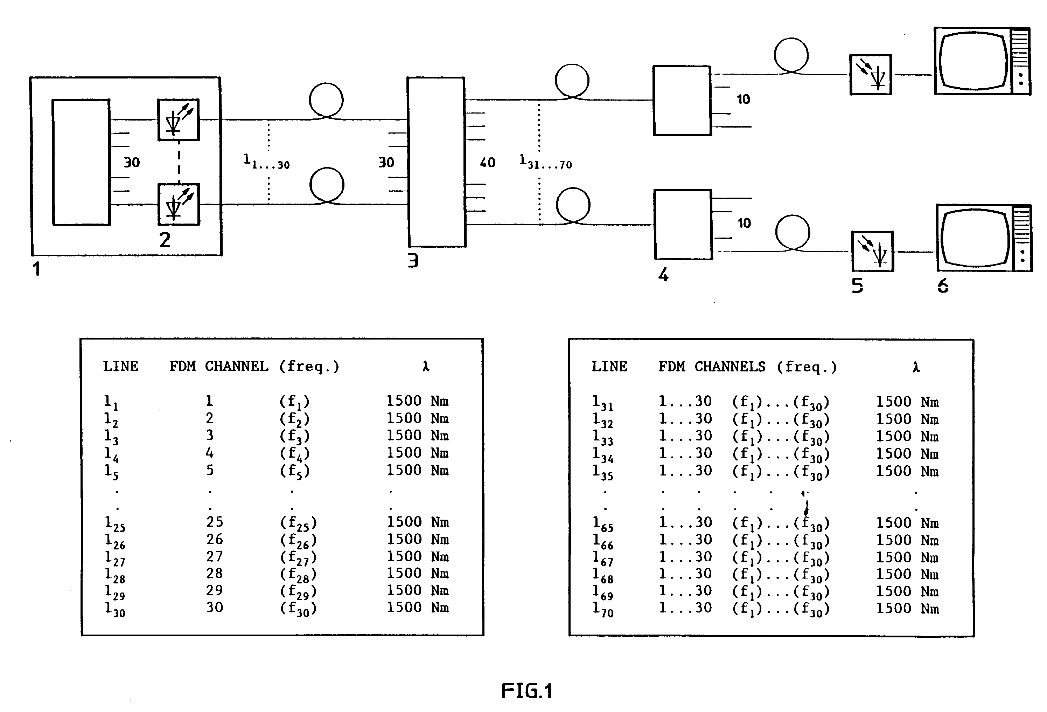

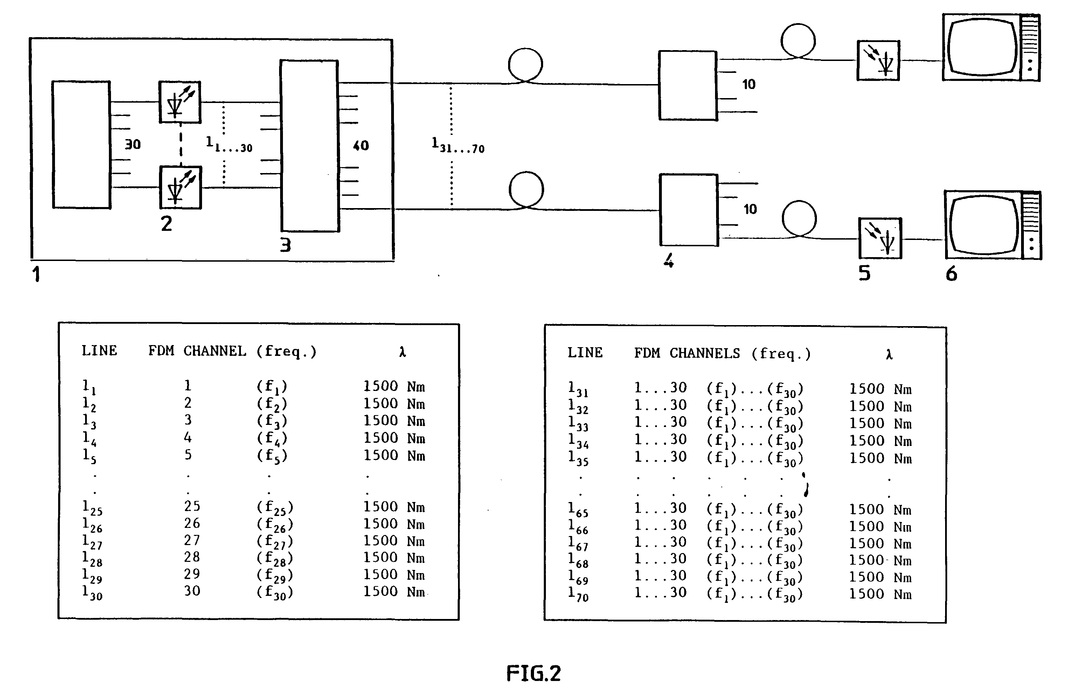

Figure 1 shows an illustrative embodiment of the invention, in which different channels are converted by different transmitting lasers and the optical output signals are transmitted via separate fibres to the subscriber side where they are combined and presented to the subscribers. Figure 2 shows an illustrative embodiment, in which the signals of different channels are converted by different transmitting lasers and the optical output signals are combined with one another and in that form are transmitted via fibres to the subscriber side and are presented to the subscribers. Both figures comprise, for the sake of clearity a table, presenting various channels, frequencies and wave lenghts.

Figure 1 shows a distribution exchange 1 for TV signals, also known as "head-end". For example, 30 TV channels are generated therein. The signals of these channels are converted by 30 lasers 2 into optical signals s_{1...30}. These 30 optical signals are transmitted via 30 optical fibres 1_{1...30} to the subscriber side where an optical splitter/combiner 3 combines the signals - which each represent one FDM channel - optically with one another, which combined signals are distributed over various outputs, for example 40. From each output of said splitter/combiner 3, the output signals s_{31...70} - in each of which therefore all 30 FDM channels are represented - are transmitted, via optical fibres l_{31...70} to an end splitter 4, where such a combined signal is distributed over a number of outputs, for example 10. Each output signal thereof is passed to a subscriber line in which there is an optical receiver 5 which converts the optical signal received (which represents all the FDM channels), into a corresponding electrical signal, the input signal for a connected TV receiver 6. Figure 2 shows the second preferred version of the invention, namely that in which on the transmitting side, in the "head-end", the different FDM channels are converted by the different transmitting lasers 2 into optical signals s_{1...30} which each represent one FDM channel. Via (short) glass fibres l_{1...30}, the optical signals s_{1...30} are combined with one another already on the transmitting side, namely in the "head-end" in a splitter/combiner 3. The output signals, which therefore each represent all 30 FDM channels, are passed to the subscriber side via, for example, 40 optical fibres l_{31...70}. There each fibre runs to the input of an end splitter 4 which distributes the signal over, for example, 10 subscriber lines in which optical receivers 5 convert the signal into an electrical signal.

The first option shown in Figure 1 is, in principle, to be preferred to the option of Figure 2, since in the first option the (long) optical fibres l_{1...30}, between the "head-end" side and the subscriber side, each separately transmit FDM channels separated from each other, as a result of which intermodulation, which occurs particularly in long fibres, is precluded. If within a not excessively large distance from the location of the splitter/combiner 3 there are a large number of subscribers, the fibres l_{31...70} do not become too long and the intermodulation (after all, each of these fibres transmits all the FDM channels in combined form) in said fibres remains limited. The less intensive the area of coverage of the combiner/splitter 3 becomes, the shorter the fibres l_{1...30} and the longer the fibres l_{31...70} must be, and the more intermodulation will occur (in the fibres l_{31...70}). In all cases, however, intermodulation by the transmitting lasers 2 is avoided, since each FDM channel is converted by its own transmitting laser.

There are two final comments:

The first comment concerns said distortion in the optical fibres l_{1...30} and l_{31...70}. This distortion occurs, in particular, when using 1300 nm fibres to which, for the purpose of amplifying the optical signal, Erbium-Doped Fibre Amplifiers (EDFAs) are connected, which function optimally in the wavelength range of 1500 nm but are less suitable for 1300 nm. So far, however, no 1300 nm fibre amplifiers are available, whereas 1300 nm glass fibres are widely used.

In the second instance it should be noted that the invention makes provision for limiting the frequency range per transmitting laser (and preferably also per optical fibre). Preferably, only one FDM channel is therefore converted per transmitting laser, and only one FDM channel is transmitted per fibre. Instead of only one FDM channel it is also possible to convert and transmit, respectively, a limited number (subset) of channels. In that case too the frequency range is limited and the effect of the distortion of the transmitting laser or optical fibre, respectively, is limited, albeit to a somewhat lesser extent. The choice made in this context depends on the actual characteristics of the lasers and the fibres and on the actual form of the network of which the fibres form part, which depends strongly on the geometric distribution of the subscribers (for example subscribers in an urban district with flats or subscribers in a rural environment).

## Claims

1. Distribution system for simultaneously distributing signals belonging to a set of different FDM channels (1...30) from an exchange (I), via an optical network, to subscribers (6) connected to said network, the signals being converted, in E/O conversion means on the side of said exchange, from electrical signals into optical signals, CHARACTERIZED BY E/O conversion devices (2) on the side of the exchange (1), by which said set of FDM channels is separated and separately converted per subset of FDM channels, each subset having a correspondingly limited frequency range relative to the full frequency range of said set of FDM channels, into optical signals by modulating, in each E/O conversion device, an optical carrier by one subset of FDM channels, and in that all those separately converted signals are only then combined in the optical domain by means of an optical coupler (3), and are distributed by means of one or more optical splitters (3, 4), and supplied to 0/E conversion devices (5) on the side of said subscribers (6) in which said distributed optical signals are re-converted into replicas of said set of FDM channels and supplied to each of said subscribers.

2. Distribution system according to Claim 1, **CHARACTERIZED IN THAT** the optical signals, separately converted per subset of FDM channels in said E/O conversion devices (2), are transmitted via separate optical fibres (l_{1...30}), each transmitting one subset of FDM channels, to the side of the subscribers (6) and are only at that side combined by said coupler (3) and are presented in the combined form (s_{31...70}) to the subscribers.

3. Distribution system according to Claim 1, **CHARACTERIZED IN THAT** the optical signals, separately converted per subset of FDM channels in said E/O conversion devices (2), are already combined, by said coupler (3), on the side of the exchange (1) and then transmitted in combined form, via one or more optical fibres (f_{31...70}), common to the different FDM channels to the side of the subscribers and are presented to the subscribers.

## Patentansprüche

1. Verteilungssystem für die gleichzeitige Verteilung von Signalen, die zu einem Satz von unterschiedlichen FDM-Kanälen gehören (1...30), von einer Vermittlungsstelle (1) über ein optisches Netzwerk zu Teilnehmern (6), die an diesem Netzwerk angeschlossen sind, wobei die Signale in elektro-optischen Umwandlungsmitteln auf der Seite der besagten Vermittlungsstelle aus elektrischen Signalen in optische Signale umgewandelt werden, gekennzeichnet durch elektro-optische Wandlermittel (2) auf der Seite der Vermittlungsstelle, durch die der besagte Satz von FDM-Kanälen zu trennen ist und je Untersatz von FDM-Kanälen getrennt in optische Signale durch Modulation in jeder elektro-optischen Umwandlungsvorrichtung eines optischen Trägers durch einen Untersatz von FDM-Kanälen umgewandelt wird, wobei jeder Untersatz einen entsprechend begrenzten Frequenzbereich aufweist in Bezug auf den vollen Frequenzbereich des besagten Satzes von FDM-Kanälen, und dass alle diese getrennt umgewandelten Signale lediglich dann in dem optischen Bereich durch das Mittel eines optischen Kopplers (3) kombiniert werden und dann durch das Mittel von einem oder mehreren optischen Strahlteilern (3, 4) verteilt werden und dann einer optisch-elektrischen Umwandlungseinrichtung (5) auf der Seite der besagten Teilnehmer (6) übermittelt werden, wobei die besagten optischen Signale in Repliken des besagten Satzes von FDM-Kanälen zurück umgewandelt werden und jedem einzelnen Teilnehmer geliefert werden.

2. Verteilungssystem nach Anspruch 1, **dadurch gekennzeichnet, dass** die optischen Signale, die jeweils getrennt je Untersatz von FDM-Kanälen in den besagten elektro-optischen Umwandlungsvorrichtungen (2) umgewandelt werden, über getrennte optische Fasern (1_{1...30}) übertragen werden, wobei jedes Signal einen Untersatz von FDM-Kanälen auf der Seite der Teilnehmer (6) überträgt und sie nur auf dieser Seite durch den besagten Koppler (3) kombiniert werden und in der kombinierten Form (S_{31...70}) den besagten Teilnehmern vorgelegt werden.

3. Verteilungssystem nach Anspruch 1, **dadurch gekennzeichnet, dass** die optischen Signale, die jeweils getrennt je Untersatz von FDM-Kanälen in den besagten elektro-optischen Umwandlungsvorrichtungen (2) umgewandelt werden, jeweils vorab kombiniert werden durch den besagten Koppler (3) auf der Seite der Vermittlungsstelle (1) und dann in kombinierter Form über eine oder mehrere optische Fasern (f_{31...70}), die zu den jeweils getrennten FDM-Kanälen gehören, zur Seite der Teilnehmer übertragen und dort den Teilnehmern vorgelegt werden.

## Revendications

1. Système de distribution pour la distribution simultanée de signaux faisant partie d'un ensemble de différents canaux FDM (1 ... 30) depuis un central (1) par l'intermédiaire d'un réseau optique, à des abonnés (6) connectés audit réseau, les signaux étant convertis, dans des moyens de conversion électrique/optique côté central depuis des signaux électriques en des signaux optiques, caractérisé par des dispositifs de conversion électrique/optique (2) côté central (1), à l'aide desquels ledit ensemble de canaux FDM est subdivisé et converti séparément pour chaque sous-ensemble de canaux FDM, chaque sous-ensemble possédant une gamme de fréquences limitée de façon correspondante par rapport à la totalité de la gamme de fréquences dudit ensemble de canaux FDM, en des signaux optiques par modulation, dans chaque dispositif de conversion électrique/optique, d'une porteuse optique par un sous-ensemble de canaux FDM, et en ce que tous ces signaux convertis séparément sont combinés ensuite seulement, dans le domaine optique, au moyen d'un coupleur optique (3), et sont distribués au moyen d'un ou de plusieurs diviseurs optiques (3, 4) et sont envoyés à des dispositifs de conversion optique/électrique (5), situés du côté desdits abonnés (6) et dans lesquels lesdits signaux optiques distribués sont reconvertis en des répliques dudit ensemble de canaux FDM et sont envoyés à chacun desdits abonnés.

2. Système de distribution selon la revendication 1, **caractérisé en ce que** les signaux optiques, qui sont convertis séparément pour chaque sous-ensemble de canaux FDM en lesdits dispositifs de conversion électrique/optique (2), sont transmis par l'intermédiaire de fibres optiques séparés (1₁ ... ₃₀), dont chacune transmet un sous-ensemble de canaux FDM au côté des abonnés(6) et sont combinés, uniquement sur ce côté, par ledit coupleur (3) et sont présentés sous la forme combinée (f_{31 ... 70}) aux abonnés.

3. Système de distribution selon la revendication 1, **caractérisé en ce que** les signaux optiques, convertis séparément pour chaque sous-ensemble de canaux FDM dans lesdits dispositifs de conversion électrique/optique (2), sont déjà combinés par ledit coupleur (3), du côté du central (1), puis sont transmis sous forme combinée, par l'intermédiaire d'une ou de plusieurs fibres optiques (f_{31 ...} ₇₀) communes aux différents canaux FDM, au côté des abonnés et sont présentés aux abonnés.
